# FASCICULE DE BREVET EUROPEEN

(11) **EP 0 399 933 B1**
(45) Date de publication et mention de la délivrance du brevet: **23.06.1993**
(21) Numéro de dépôt: 90440034.8
(22) Date de dépôt: 23.04.1990
(51) Int. Cl.: E05D 15/06

(54) **Dispositif de roulement pour ouvrant coulissant de portes, fenêtres ou analogues**
Rollvorrichtung für Schiebetüren, -fenster oder ähnliches
Rolling device for sliding doors, windows or the like

(30) Priorité: 22.05.1989 FR 8906834
(43) Date de publication de la demande: 28.11.1990
(73) Titulaire: FERCO INTERNATIONAL Usine de Ferrures de Bâtiment Société à responsabilité limitée, F-57400 Sarrebourg (FR)
(72) Inventeur: Prevot, Gérard, F-57430 Willerwald (FR)
(74) Mandataire: Aubertin, François

(56) Documents cités:
- DE-U- 8 216 394
- GB-A- 2 142 365
- US-A- 2 805 107

## Description

L'invention concerne un dispositif de roulement pour ouvrant coulissant de portes, fenêtres ou analogues conforme au préambule de la revendication 1.

Cette invention trouvera son application, plus particulièrement, dans le domaine de la quincaillerie du bâtiment et de l'ameublement.

On connaît déjà un certain nombre de dispositifs de roulement correspondant à la description qui est en faite ci-dessus et facilitant le déplacement d'un ouvrant coulissant, par exemple, d'une porte, fenêtre, ou analogue.

Ainsi, ces dispositifs de roulement sont constitués, dans tous les cas, d'un chariot rapporté au-dessous de la traverse inférieure dudit ouvrant par l'intermédiaire d'éléments de fixation appropriés. A ce propos, on précisera qu'il est fréquent d'intégrer ce chariot dans une rainure aménagée dans un profilé, lui-même rapporté de sous la traverse inférieure de l'ouvrant ou, éventuellement, constituant ladite traverse inférieure.

Ce chariot est, par ailleurs, muni d'éléments de roulement tels que des galets montés libres en rotation sur des axes horizontaux intégrés audit chariot. Il est fréquent de concevoir ces éléments de roulement et notamment les galets en un matériau résiliant susceptible d'atténuer les bruits de roulement lors du coulissement de l'ouvrant. Cependant, de tels matériaux résiliants ont pour inconvénient de s'user rapidement ce qui oblige le fabricant de prévoir des moyens permettant à l'usager, de procéder, ultérieurement, au remplacement de ces éléments de roulement.

Ainsi, il est connu, par le document DE-U-8.216.394, un dispositif de roulement comprenant un chariot en tôle emboutie et pliée servant au maintien et au guidage d'un élément de roulement et, notamment, d'un galet. Plus précisément, ce chariot se compose, selon un premier mode de réalisation, de deux ailes parallèles verticales reliées au niveau de leur chant inférieur, à une paroi horizontale. Dans cette dernière est aménagée une ouverture dans laquelle peut être inséré, partiellement, l'élément de roulement. Par ailleurs, les ailes parallèles verticales présentent, au niveau de leur chant inférieur, des découpes recevant les extrémités de l'axe sur lequel est monté, libre en rotation, le galet constituant ledit élément de roulement.

En fait, ce n'est que sous l'effet de la gravité et en raison du poids de l'ouvrant, reposant sur le ou les chariots des dispositifs de roulement, que les extrémités de l'axe, correspondant aux éléments de roulement, sont maintenues dans leur découpe respective aménagée dans ledit chariot.

Cette solution est peu satisfaisante et, dans tous les cas, peu fiable. En effet, l'ouvrant coulissant d'une porte, fenêtre ou analogue présente, généralement, un jeu vertical par rapport à son cadre dormant pour en autoriser le montage. Aussi, une commande brutale ou un obstacle rencontré au moment de l'ouverture ou de la fermeture de cet ouvrant coulissant peut engendrer un soulèvement de ce dernier et, finalement le dégagement, inopiné des éléments de roulement de leurs chariots.

Dans ce document antérieur, il est également prévu, selon un autre mode de réalisation, de concevoir le chariot à partir d'une tôle emboutie et pliée de sorte qu'il comporte, dans ce cas, deux ailes parallèles verticales reliées, au niveau de leur chant supérieur, à une paroi horizontale. Dans le chant inférieur de ces ailes parallèles verticales, sont aménagées des découpes en forme d'un entonnoir débouchant, au travers d'un étranglement de largeur légèrement inférieure au diamètre de l'axe sur lequel est monté un élément de roulement, dans une ouverture, de forme oblongue, susceptible d'accueillir l'axe en question.

L'élasticité générale d'un chariot constitué en une tôle emboutie et pliée autorise le passage de cet axe, au travers de l'étranglement de la découpe précitée, par une simple pression ou une traction exercée sur l'élément de roulement. Aussi, celui-ci ne peut être retiré de son chariot que suite à une intervention de l'usager.

En somme, bien qu'apportant une solution au problème du dispositif de roulement conçu selon le premier mode de réalisation exposé ci-dessus, le dispositif de roulement correspondant au second mode de réalisation n'en présente pas moins un certain nombre d'inconvénients liés, notamment, à la conception du chariot.

En effet, celui-ci est réalisé à partir d'une tôle pliée et emboutie qui, en réalité, ne présente qu'une moindre résistance mécanique. Notamment, sous l'effet du poids de l'ouvrant coulissant ou d'une manipulation maladroite de ce dernier, les ailes parallèles verticales du chariot ont tendance à se déformer. Il conviendra, généralement, d'insérer ledit chariot dans un profilé de section en "U" rapporté sous la traverse inférieure de l'ouvrant coulissant.

Par ailleurs, la tôle constituant ces chariots étant nécessairement de faible épaisseur, les extrémités de l'axe, sur lequel est monté un élément de roulement, sont amenées à évoluer sur des portées de largeur réduite provoquant, fréquemment, une usure rapide de cet axe. De plus, de telles portées réduites et de type métallique sont génératrices de bruit lors de l'ouverture ou de la fermeture de l'ouvrant coulissant.

Aussi, pour diminuer l'amplitude de ces bruits de roulement lors de la manipulation d'un ouvrant coulissant, il a été conçu un dispositif de roulement dont le chariot est réalisé en un matériau synthétique moulé. Un tel dispositif de roulement est décrit, plus particulièrement, dans le document FR-A-2.558.885. En fait, celui-ci fait référence à un chariot composé de deux ailes parallèles verticales rendues solidaires l'une de l'autre, au niveau de leur chant supérieur, par l'intermédiaire d'une paroi horizontale. Dans le chant inférieur de ces ailes parallèles et verticales est réalisée une découpe en forme d'entonnoir débouchant, au travers d'un étranglement, dans une ouverture de diamètre ajusté à celui de l'axe sur lequel est monté, libre en rotation, l'élément de roulement. Ainsi, au cours du montage, cet élément de roulement est installé entre lesdites ailes parallèles verticales du chariot tandis que les extrémités de son axe sont engagées dans les découpes en forme d'entonnoir précitées. Il s'agit, alors, d'exercer une certaine pression sur cet élément de roulement afin de forcer le passage des extrémités de l'axe au travers de l'étranglement de sorte qu'elles viennent à se loger dans les ouvertures de dimension ajustées à cet effet. On notera, en outre, que cet axe peut également être conçu, selon ce document antérieur, en un matériau synthétique.

En fait, le dispositif de roulement décrit dans ce second document antérieur, bien que remédiant au problème du bruit que génèrent, habituellement, les dispositifs de roulement de type métallique, fait intervenir un chariot dont la résistance mécanique n'est guère supérieure à un chariot conçu en tôle emboutie et pliée.

La présente invention se propose, précisément, d'apporter une solution à l'ensemble des problèmes précités et, notamment, en révélant un dispositif de roulement, non seulement particulièrement résistant mais, en outre, de niveau sonore au fonctionnement réduit au minimum.

L'invention telle qu'elle est caractérisée dans les revendications résout le problème et consiste en un dispositif de roulement pour ouvrant coulissant de portes, fenêtres ou analogues, comprenant un chariot rapporté en dessous de la traverse inférieure dudit ouvrant et munie, d'une part, d'au moins un élément de roulement monté libre en rotation sur un axe horizontal, et d'autre part, de moyens déformables élastiquement pour guider et supporter l'axe, ledit chariot de type métallique comportant des réservations susceptibles d'accueillir lesdits moyens, ceux-ci étant constitués par des paliers comportant une partie cylindrique délimitant un orifice de diamètre ajusté à l'axe sur lequel est monté l'élément de roulement, cette partie cylindrique du palier présentant, en outre, une ouverture définissant un étranglement de section plus faible que le diamètre de cet axe et au travers duquel celui-ci accède à l'orifice de ladite partie cylindrique par déformation élastique du palier.

Les principaux avantages obtenus grâce à la présente invention consistent en ce que, un chariot métallique, donc particulièrement résistant, est à même d'accueillir des éléments de roulement par simple emboîtement de ces derniers ce qui rend leur remplacement particulièrement commode. En fait, ces avantages sont dûs principalement aux moyens de support et de guidage de l'axe d'un élément de roulement qui, en raison de leur élasticité, permettent un montage et un démontage aisé de ce dernier mais, en outre, sont à l'origine d'un niveau sonore de fonctionnement particulièrement bas.

L'invention est exposée ci-après plus en détail à l'aide de dessins représentant seulement un mode d'exécution.
- la figure 1 représente une vue schématisée et en coupe du dispositif de roulement, conforme à l'invention et disposée dans la rainure d'un profilé en "U" équipant la traverse inférieure de l'ouvrant coulissant ;
- la figure 2 représente une vue en coupe selon II-II de la figure 1 ;
- la figure 3 est une vue schématisée et partielle du dispositif de roulement et représentant, plus particulièrement, un mode de réalisation des moyens de support et de guidage de l'axe d'un élément de roulement.

On se réfère aux différentes figures.

La présente invention est relative à un dispositif de roulement 1 destiné à être rapporté sous la traverse inférieure 2 d'un ouvrant coulissant 3 correspondant à une porte, fenêtre ou analogue. En fait, un tel dispositif de roulement 1 à pour fonction de faciliter le déplacement dudit ouvrant coulissant 3 et, ce, avec un moindre bruit de fonctionnement.

A cet effet, il peut être fixé, directement, sous ladite traverse inférieure 2 ou intégré dans un profilé en "U" 4 équipant, fréquemment, cette dernière.

Cette seconde solution est communément adoptée en raison d'impératifs esthétiques. En effet, elle permet de rendre les dispositifs de roulement d'un ouvrant coulissant particulièrement discret sans qu'il ne soit nécessaire d'entailler la traverse inférieure 2 de cet ouvrant coulissant.

Le dispositif de roulement 1, objet de la présente invention se compose, d'une part, d'un chariot 5 fixé à ladite traverse inférieure 2 de l'ouvrant coulissant 3 et, d'autre part, d'au moins un élément de roulement 6 intégré audit chariot 5.

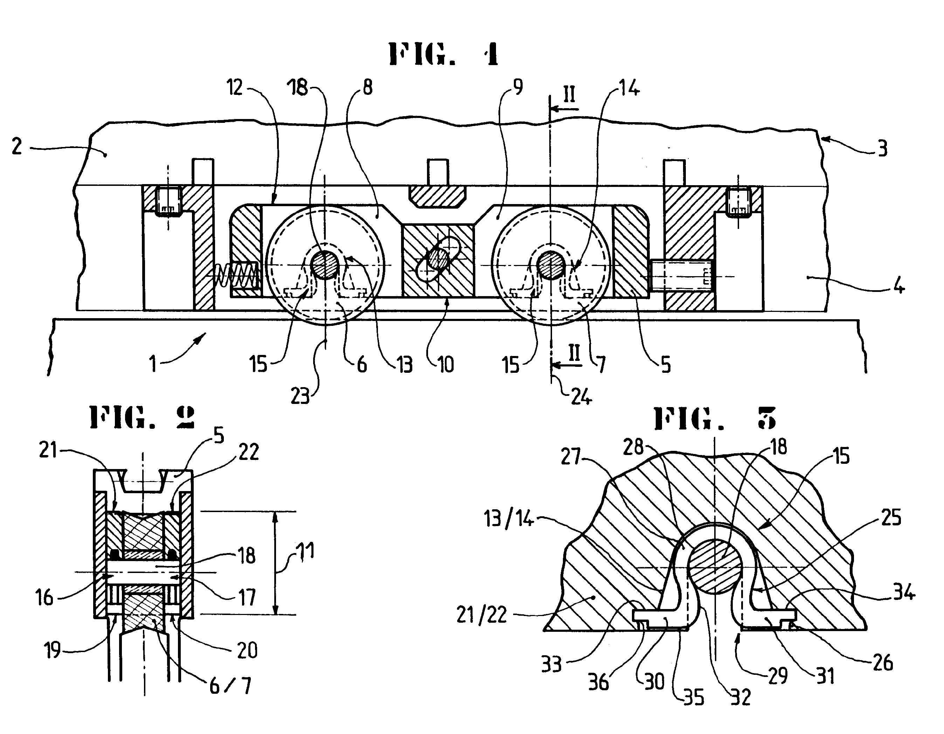

La figure 1 illustre un dispositif de roulement muni de deux éléments de roulement 6, 7. Toutefois, il est bien évident que la présente invention ne se limite nullement à un tel mode de réalisation et il est possible d'équiper ledit dispositif de roulement 1 d'un seul élément de roulement 6 ou encore de lui en attribuer un nombre beaucoup plus important.

Avantageusement, le chariot 5 se présente sous forme d'une pièce métallique forgée ou moulée ce qui lui confère une bonne résistance mécanique indispensable en cas d'application du dispositif de roulement 1 à des ouvrants coulissants particulièrement lourds, notamment de portes-fenêtres.

Ce chariot 5 comporte, en outre, des logements 8, 9 servant à accueillir des éléments de roulement 6, 7, tels que des galets, rouleaux ou analogues. En fait, ces logements 8, 9 seront, nécessairement débouchants au niveau de la face inférieure 10 du chariot 5 de sorte que les éléments de roulement 6, 7 soient en mesure d'émerger, partiellement desdits logements 8, 9 et de coopérer avec une glissière généralement apposée sur la traverse inférieure du cadre dormant de la porte, fenêtre ou analogue.

De plus, de manière à réduire, au minimum, la hauteur 11 du dispositif de roulement 1 et, en fait, l'encombrement général de ce dernier, ces logements 8, 9, pourront également être débouchants au niveau de la face supérieure 12 du chariot 5. Ainsi, les éléments de roulement 6, 7 seront en mesure de se présenter à fleur avec ladite face supérieure 12 de ce chariot 5.

Tel que déjà précisé plus haut, les éléments de roulement 6, 7 sont conçus, de préférence, en un matériau synthétique de manière à atténuer, sensiblement, leur bruit de roulement sur la glissière aménagée sur la traverse inférieure du cadre dormant. Cependant, de tels matériaux synthétiques sont, généralement, d'usure rapide. Aussi, il doit être possible de pouvoir remplacer, au moment opportun, lesdits éléments de roulement 6, 7.

Dans ce but et selon une caractéristique de la présente invention, le chariot 5 comporte des réservations 13, 14 susceptibles d'accueillir des moyens 15 de support et de guidage, déformables élastiquement, dans lesquels peuvent être insérées, de manière démontable, les extrémités 16, 17 des axes horizontaux 18 sur lesquels sont montés, éventuellement libres en rotation, les éléments de roulement 6, 7.

Selon un mode de réalisation préférentiel de la présente invention, les réservations 13, 14 consistent en des découpes aménagées dans le chant inférieur 19, 20 des parois latérales 21, 22 du chariot 5, sensiblement, dans le plan médian transversal 23, 24 des logements 8, 9 dans lesquels sont intégrés les éléments de roulement 6, 7. Ces découpes ou réservations 13, 14 vont en s'évasant en direction dudit chant inférieur 19, 20 des parois latérales 21, 22 et accueillent les moyens de support et de guidage 15.

Préférentiellement, ceux-ci sont constitués par des paliers 25 conçus, avantageusement, en un matériau déformable élastiquement et, notamment, en matières synthétiques, et empruntant la forme d'un oméga. Aussi, ce palier 25 se décompose-t-il en une partie cylindrique 27 entrouverte, délimitant un orifice 28 de diamètre ajusté à l'axe 18 sur lequel est monté un élément de roulement 6, 7, et d'une embase 29 constituée de deux pattes horizontales 30, 31 s'étendant dans des directions opposées et rendues solidaires de la partie cylindrique 27. On notera que l'ouverture 32 aménagée dans cette dernière, définit un étranglement de section plus faible que le diamètre de l'axe 18 et au travers duquel celui-ci accède à l'orifice 28. Ceci est rendu possible en raison du matériau élastique composant les paliers 25. A ce propos, il convient également, de remarquer que les paliers 25 en matière synthétique permettent l'usage d'axe 18 conçus en un matériau identique.

Préférentiellement, et selon une autre caractéristique de la présente invention, le maintien de ces paliers 25 dans les réservations 13, 14 est obtenu par l'intermédiaire d'un sertissage 26. Plus précisément, dans le chant inférieur 19, 20 des parois latérales 21, 22 du chariot 5 et aux abords des réservations 13, 14 sont réalisés des décrochements 33, 34 susceptibles d'accueillir les extrémités libres des pattes horizontales 30, 31. Celles-ci comportent, également, au niveau de leur face inférieure et à leur extrémité libre, un décrochement 36 dans lequel est refoulée la matière au moment du sertissage pratiqué dans le chant inférieur (19, 20) desdites parois latérales (21, 22).

Ainsi, après montage et sertissage des différents paliers 25, constituant les moyens de support et de guidage 15, dans les réservations 13, 14 du chariot 5, on y insère les extrémités 16, 17 des axes horizontaux 18 correspondant aux éléments de roulement 6, 7. Dans ce but, il est nécessaire d'exercer une certaine pression sur lesdits éléments de roulement 6, 7 de manière à provoquer le passage des extrémités 16, 17 de leur axe 18 au travers de l'étranglement des paliers 25 et assurer leur engagement dans les orifices 28 ajustés en conséquence.

En somme, en associant à un chariot métallique résistant, des moyens de support et de guidage, déformables élastiquement, et dans lesquels peuvent être insérés, par simple emboîtement, les axes horizontaux des éléments de roulement, la présente invention remédie à l'ensemble des inconvénients rencontrés dans le cadre des dispositifs de roulements connus jusqu'à présent.

## Revendications

1. Dispositif de roulement pour ouvrant coulissant de portes, fenêtres ou analogues, comprenant un chariot (5) rapporté en-dessous de la traverse inférieure (2) dudit ouvrant coulissant (3) et muni, d'une part, d'au moins un élément de roulement (6, 7), monté libre en rotation, sur un axe horizontal (18), et, d'autre part, de moyens (15), déformables élastiquement, pour guider et supporter l'axe (18) caractérisé par le fait que ledit chariot (5), de type métallique, comporte des réservations (13, 14) susceptibles d'accueillir des moyens (15), ceux-ci étant constitués par des paliers (25) comportant une partie cylindrique (27) délimitant un orifice (28) de diamètre ajusté à l'axe (18), cette partie cylindrique (27) du palier (25) présentant, en outre, une ouverture (32) définissant un étranglement de section plus faible que le diamètre de l'axe (18) et au travers duquel celui-ci accède à l'orifice (28) de ladite partie cylindrique (27) par déformation élastique du palier (25).

2. Dispositif de roulement selon la revendication 1, caractérisé par le fait que les réservations (13, 14) consistent en des découpes aménagées dans le chant inférieur (19, 20) des parois latérales (21, 22) du chariot (5), sensiblement, dans le plan médian transversal (23, 24) d'un logement (8, 9) aménagé dans ce dernier et dans lequel est introduit, partiellement, l'élément de roulement (6, 7).

3. Dispositif de roulement selon la revendication 2, caractérisé par le fait que les découpes aménagées dans les parois latérales (21, 22) du chariot (5) et dans lesquelles sont engagés les paliers (25), vont en s'évasant en direction du chant inférieur (19, 20) desdites parois latérales (21, 22).

4. Dispositif de roulement selon la revendication 1, caractérisé par le fait que les paliers (25) sont conçus en un matériau déformable élastiquement tel qu'en matière synthétique.

5. Dispositif de roulement selon la revendication 1, caractérisé par le fait que les paliers (25) comportant une embase (29) constituée de deux pattes horizontales (30, 31) rendues solidaires de la partie cylindrique (27) en bordure de l'ouverture (32) et s'étendant dans des directions opposées, conférent auxdits paliers (25) une forme de "Oméga".

6. Dispositif de roulement selon la revendication 1, caractérisé par le fait que les paliers (25), introduits dans les réservations (13, 14) aménagées dans les parois latérales (21, 22) du chariot (5) sont rendus solidaires de ce dernier par sertissage (26).

7. Dispositif de roulement selon les revendications 5 et 6, caractérisé par le fait que les parois latérales (21, 22) du chariot (5) comportent, au niveau de leur chant inférieur (19, 20) et aux abords des réservations (13, 14), des décrochements (33, 34) susceptibles d'accueillir les extrémités libres des pattes horizontales (30, 31) correspondant aux paliers (25).

8. Dispositif de roulement selon les revendications 5 et 6, caractérisé par le fait que les paliers (25) présentent, au niveau de l'extrémité libre et de la face inférieure (35) de leurs pattes horizontales (30, 31), un décrochement (36) dans lequel est refoulée la matière au moment du sertissage pratiqué dans le chant inférieur (19, 20) des parois latérales (21, 22) du chariot (5).

9. Dispositif de roulement selon la revendication 1, caractérisé par le fait que l'axe (18), sur lequel est monté l'élément de roulement (6, 7), est conçu en une matière synthétique.

## Patentansprüche

1. Rollenvorrichtung für Schiebeflügel von Fenstern, Türen od. dgl. mit einem Wagen (5), der unten an dem unteren Querholm (2) des Schiebeflügels (3) angebracht ist und einerseits mit mindestens einem auf einer horizontalen Achse (18) frei drehbaren Rollenelement (6, 7) und andererseits mit elastisch verformbaren Miteln (15) zum Führen und Halten der Achse (18) versehen ist,
**dadurch gekennzeichnet**, daß der aus Metall bestehende Wagen (15) Sitze (13, 14) zur Aufnahme der Führungs- und Haltemittel (15) aufweist, die ihrerseits von Lagerbügeln (25) gebildet sind mit einem zylindrischen Teil (27), der eine Öffnung (28) von an die Achse (18) angepaßtem Durchmesser begrenzt und ferner eine Öffnung (32) aufweist, die eine Verengung von kleinerem Querschnitt als der Durchmesser der Achse (18) definiert, durch welche die Achse unter elastischer Verformung des Lagerbügels (25) in die Öffnung (28) des zylindrischen Teils (27) gelangen kann.

2. Vorrichtung nach Anspruch 1, **dadurch gekennzeichnet**, daß die Sitze (13, 14) aus Ausschnitten in der unteren Stirnfläche (21, 22) des Wagens (5) bestehen, im wesentlichen in der Quermittelebene (23, 24) einer in diesem ausgebildeten Kammer (8, 9), in der teilweise das Rollenelement (6, 7) aufgenommen ist.

3. Vorrichtung nach Anspruch 2, **dadurch gekennzeichnet**, daß die Ausschnitte in den Seitenwänden (21, 22) des Wagens (5), in die die Klemmen (25) eingesetzt sind, sich in Richtung zur unteren Kante (19, 20) der Seitenwände (21, 22) verbreitern.

4. Vorrichtung nach Anspruch 1, **dadurch gekennzeichnet**, daß die Lagerbügel (25) aus einem elastisch verformbaren Material wie z.B. Kunststoff bestehen.

5. Vorrichtung nach Anspruch 1, **dadurch gekennzeichnet**, daß die Lagerbügel (25) eine Basis (29) aus zwei horizontalen Schenkeln (30, 31) aufweisen, die mit dem zylindrischen Teil (27) als Begrenzung der Öffnung (32) zusammenhängen und sich in entgegengesetzten Richtungen erstrecken, so daß die Lagerbügel die Form eines Omega haben.

6. Vorrichtung nach Anspruch 1, **dadurch gekennzeichnet**, daß die Lager (25), die an die Sitze (13, 14) in den Seitenwänden(21, 22) des Wagens (5) eingesetzt sind, an diesem durch Quetschverbindung befestigt sind.

7. Vorrichtung nach Anspruch 5 und 6, **dadurch gekennzeichnet**, daß die Seitenwände (21, 22) des Wagens (5) an ihrer unteren Kante (19, 20) am Rand der Sitze (13, 14) Ausnehmungen (33, 24) aufweisen zur Aufnahme der freien Enden der horizontalen Schenkel (30, 31) der Lagerbügel (25).

8. Vorrichtung nach Anspruch 5 und 6, **dadurch gekennzeichnet**, daß die Lagerbügel (25) am freien Ende und an der Unterseite (35) ihrer horizontalen Schenkel (30, 31) einen Absatz (36) aufweisen, in den der Werkstoff bei der Quetschverbindung an der unteren Kante (19, 20) der Seitenwände (21, 22) des Wagens (5) hineingestaucht wird.

9. Vorrichtung nach Anspruch 1, **dadurch gekennzeichnet**, daß die Achse (18), auf dem das Rollenelement (6, 7) gelagert ist, aus Kunststoff besteht.

## Claims

1. Rolling device for sliding doors, windows or the like, comprising a slide (5) inserted below the lower rail (2) of said sliding wing (3) and provided, on the one hand, with at least one rolling member (6, 7) free rotatingly mounted onto a horizontal spindle (18) and, on the other hand, means (15), capable of being elastically distorted, for guiding and supporting the spindle (18), characterized in that said metallic-type slide (5) includes recesses (13, 14) capable of receiving means (15), these latter being comprised of bearings (25) including a cylindrical portion (27) defining a hole (28) with a diameter adjusted to the spindle (18), this cylindrical portion (27) of the bearing (25) having furthermore an opening (32) defining a narrowing with a cross-section smaller than the diameter of the spindle (18) and through which this latter reaches the hole (28) of said cylindrical portion (28) through elastical distortion of the bearing (25).

2. Rolling device according to claim 1, characterized in that the recesses (13, 14) consist in cuttings made in the lower edge (19, 20) of the side walls (21, 22) of the slide (5) substantially in the transversal median plane (23, 24) of a recess (8, 9) made in this latter and into which is partially engaged the rolling member (6, 7).

3. Rolling device according to claim 2, characterized in that the cuttings made in the side walls (21, 22) of the slide (5) and into which are engaged the bearings (25) are widening in the direction of the lower edge (19, 20) of said side walls (21, 22).

4. Rolling device according to claim 1, characterized in that the bearings (25) are made of a material capable of being elastically distorted, such as a synthetic material.

5. Rolling device according to claim 1, characterized in that the bearings (25) include a base (29) comprised of two horizontal feet (30, 31) made integral with the cylindrical portion (27) along the side of the opening (32) and extending in opposite directions, conferring to said bearings (25) an "Omega"-shape.

6. Rolling device according to claim 1, characterized in that the bearings (25) engaged into the recesses (13, 14) made in the side walls (21, 22) of the slide (5) are made integral with this latter by crimping (26).

7. Rolling device according to claims 5 and 6, characterized in that the side walls (21, 22) of the slide (5) include, at the level of their lower edge (19, 20) and at the surroundings of the recesses (13, 14), set-backs (33, 34) capable of receiving the free ends of the horizontal feet (30, 31) corresponding to the bearings (25).

8. Rolling device according to claims 5 and 6, characterized in that the bearings (25) have, at the level of the free end and the lower face (35) of their horizontal feet (30, 31), a set-back into which is forced the material at the moment of the crimping made in the lower edge (19, 20) of the side walls (21, 22) of the slide (5).

9. Rolling device according to claim 1, characterized in that the spindle (18) onto which is mounted the rolling member (6, 7) is made of a synthetic material.
